# EUROPEAN PATENT SPECIFICATION

(11) **EP 2 241 472 B1**
(45) Date of publication and mention of the grant of the patent: **24.04.2019**
(21) Application number: 10158359.9
(22) Date of filing: 30.03.2010
(51) Int. Cl.: B60L 9/30, B60L 58/10, B60L 7/16

(54) **Power storage control apparatus and method of electric vehicle**
Steuerungsvorrichtung zur Energiespeicherung und Verfahren für elektrisches Fahrzeug
Appareil de commande de stockage d'énergie et procédé de véhicule électrique

(30) Priority: 15.04.2009 JP 2009099055
(43) Date of publication of application: 20.10.2010
(73) Proprietor: Kabushiki Kaisha Toshiba, Tokyo 105-8001 (JP)
(72) Inventor: Koga, Takeru, Tokyo 105-8001 (JP); Nogi, Masayuki, Tokyo 105-8001 (JP); Toda, Shinichi, Tokyo 105-8001 (JP); Nakazawa, Yosuke, Tokyo 105-8001 (JP)
(74) Representative: Hoffmann Eitle

(56) References cited:
- EP-A1- 2 039 559
- EP-A2- 1 520 746
- EP-A2- 1 724 147
- JP-A- 2003 199 204
- US-A1- 2008 288 192
- DVORACEK V ET AL: "ELEKTRISCHE DOPPELLOKOMITIVEN FUER DIE NORDSKANDINAVISCHE ERZBAHN//ELECTRIC TWIN-LOCOMITIVES FOR NORTH-SCANDINAVIAN IRON-ORE RAILWAY LINE//LOCOMOTIVES ELECTRIQUES COUPLEES EN DOUBLE POUR LA LIGNE MINIERE EN NORD-SCANDINAVIE" ELEKTRISCHE BAHNEN, OLDENBOURG INDUSTRIEVERLAG, MUNCHEN, DE, vol. 99, no. 8, 1 August 2001 (2001-08-01) , pages 311-324, XP001087022 ISSN: 0013-5437

## Description

The present invention relates to a power storage control apparatus and method of an electric vehicle running on a railway. The power storage control apparatus is effectively applicable to a control apparatus which supplies, to the main circuit of an electric vehicle incapable of receiving power (for example, in case of a power failure in overhead wires or in an area where no overhead wires exist), power from a power storage device provided in the electric vehicle, thereby making the electric vehicle run by itself at low speed to the nearest power supply point.

When power supply from overhead wires or the like is impossible, a current electric vehicle cannot move and needs to wait for a rescue car. However, some trolleybuses have solved this problem so that they can move at low speed using an onboard battery as a power supply, for example, around the garage without trolley wires. In a trolleybus, the load capacity of auxiliary circuits (lighting, air conditioning, and the like) is small. Hence, all circuits including a main motor can be driven by a battery. In a general train, however, a high-voltage auxiliary power supply unit that operates at the overhead wire voltage supplies AC power to auxiliary circuits having a large load capacity. Without supply of the overhead wire voltage, the high-voltage auxiliary power supply unit does not operate.

In addition, the main motor is not battery-drivable. For these reasons, the general train cannot move by itself to a nearest appropriate point, and presently asks for a rescue car while keeping the track occupied.

An electric vehicle generally obtains a regenerated power upon braking. A technique of effectively using the regenerated energy has been known (e.g., Jpn. Pat. Appln. KOKAI Publication No. 2003-199204). The regenerated energy is used for, e.g., powered running (acceleration).

Power supply measures need to be taken even against an instantaneous power supply interruption that occurs in a DC electric railcar upon off-wire of the pantograph, a short-time power supply interruption that always occurs in an AC electric railcar passing through a dead section, and a relatively long-time power supply interruption of an AC/DC electric railcar (a train able to run on both AC and DC power). Power supply measures against the instantaneous or short-time power supply interruption can be taken by preparing-a capacitor having a large capacity to compensate for offline periods.

For the long-time power supply interruption, a power storage device needs to be prepared to prevent the lamps in the car from turning off. For this purpose, not an economical AC fluorescent lamp but a DC fluorescent lamp which is expensive to some degree needs to be adopted.

Furthermore, in train stop control of automatic train operation, a regenerated power absorption disabled state just before a stop largely degrades the stopping position accuracy.

EP 1 724 147 A2 describes a control system for an electric motor car. According to the teachings of the publication when a regenerative breaking operation is carried out, AC power generated by a motor is converted into DC power by a VVVF inverter and stored and consumed by a power storage unit and a CVCF inverter. In a power running operation, power from a fuel cell, from the power storage unit and from an overhead line are supplied to the VVVF inverter and the CVCF inverter. During a coasting operation, power from the fuel cell, from the power storage unit and from the overhead line are supplied to the CVCF inverter.

An object of the invention is to provide a power storage control apparatus and method of an electric vehicle, wherein a step-up/step-down chopper and a power storage device are combined in such a manner that the power storage control apparatus can apply power
enabling powered running to a main circuit even in a slow-speed mode and that the power storage control apparatus serves as a high-voltage auxiliary power supply capable of applying sufficiently high voltage to auxiliary circuits.

According to one embodiment the present invention, there is provided a power storage control apparatus of an electric vehicle, which selectively employs one of a first running state (a normal running state) in which power from an overhead wire (10) is used and a second running state (an emergency running state) in which power from a power storage device (32) is used. The power storage control apparatus comprises: a step-up/step-down chopper (31) including a first input/output portion that receives the power from the overhead wire via an input circuit (20A) and connected to an input portion of a CVCF inverter (21) for an auxiliary circuit, and a second input/output portion connected to the power storage device; a contactor (12) configured to supply one of a voltage from the overhead wire and a voltage of the power storage device to an input portion of a VVVF inverter (15) of a main circuit; and a control unit (100) which controls the step-up/step-down chopper (31) and the contactor (12).
the control unit (100) is configured to control the contactor (12) so as to make the contactor supply the voltage from the overhead wire to the input portion of the VVVF inverter (15) of the main circuit in the first running state and supply the voltage of the power storage device to the input portion of the VVVF inverter (15) in the second running state, and control the step-up/step-down chopper so as to make the step-up/step-down chopper perform a step-down operation to charge the power storage device (32) in the first running state and perform a step-up operation to discharge the power storage device (32) and supply the power to the CVCF inverter (21) in the second running state.

The invention can be more fully understood from the following detailed description when taken in conjunction with the accompanying drawings, in which:
FIG. 1 is a circuit diagram showing an example in which the power storage device of a trolleybus is applied to a railway vehicle;
FIG. 2 is a circuit diagram showing an example in which an apparatus of the present invention is applied to a DC electric railcar;
FIGS. 3A and 3B are circuit diagrams for explaining the operation of the power storage control apparatus shown in FIG. 2;
FIG. 4 is a graph for explaining the relationship between a vehicle speed and a tractive force for the voltage of a power storage device in FIG. 2 and the voltage of overhead wires;
FIG. 5 is a circuit diagram showing another example that replaces a blocking diode in FIG. 2;
FIGS. 6A, 6B and 6C are graphs showing examples of the time series of a train speed, overhead wire voltage, and state of charge (SOC) so as to explain an operation example of the apparatus according to the present invention;
FIG. 7 is a view showing an example of an overhead wire voltage fluctuation range;
FIG. 8 is a circuit diagram showing an example in which the apparatus of the present invention is applied to an AC electric railcar;
FIG. 9 is a circuit diagram showing an example in which the apparatus of the present invention is applied to an AC/DC electric railcar;
FIG. 10 is a circuit diagram showing an example of application to a DC electric railcar according to another embodiment of the present invention; and
FIGS. 11A, 11B and 11C are graphs showing examples of the time series of a train speed, state of charge (SOC), and power consumption of the train so as to explain an operation example of the apparatus in FIG. 10.

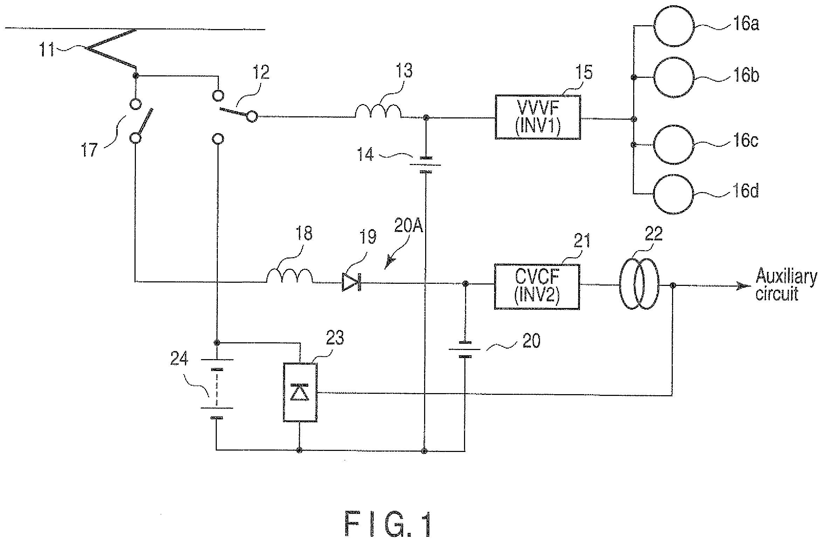

An embodiment of the present invention will now be described in detail. A drive control method currently used by, e.g., a trolleybus capable of battery-driven running will be explained first with reference to the general circuit of an electric-car line shown in FIG. 1.

A current collector 11 which collects power from the outside such as an electric-car line supplies its output power to contactors 12 and 17. In a normal state, the power that has passed through the contactor 12 is filtered by a reactor 13 and a capacitor 14 and supplied to a variable voltage, variable frequency (VVVF) inverter 15. In the normal state, the power that has passed through the contactor 17 is supplied to a constant voltage, constant frequency (CVCF) inverter 21 via an input circuit 20A including a reactor 18, blocking diode 19, and capacitor 20. The reactor 18 and the capacitor 20 form a filter.

The output from the VVVF inverter 15 is supplied to main motors 16a to 16d. The output from the CVCF inverter 21 is supplied to auxiliary circuits such as the fluorescent lamps in the bus. In the normal state, a rectifier 23 rectifies a three-phase current output from the CVCF inverter 21 and charges a battery 24.

Assume that power supply from the current collector 11 stops. The contactor 12 switches to the battery 24 to supply a DC voltage from the battery 24 to the VVVF inverter 15. The DC voltage drives the main motors on the main circuit side. Since the power from the current collector 11 has a high voltage and a sufficiently large power limit value, the bus can run at high speed. However, the power from the battery 24 has a lower voltage and a smaller power limit value than those of the power from the current collector 11. For this reason, the bus can run at very low speed. This battery-driven running is carried out when driving in a garage or for evacuation in case of a power failure on a commercial line.

In the battery-driven running, the CVCF inverter 21 cannot operate because the voltage of the battery 24 is too low. Hence, when the AC output of the CVCF inverter is connected to the fluorescent lamps and the like, the fluorescent lamps turn off. Actually, to prevent the lamps from turning off, DC fluorescent lamps that are turned on by DC power from the battery are used. However, the power supply of fluorescent lamps in a general electric railcar uses AC output from a CVCF inverter, and the method used by the trolleybus requires expensive equipment.

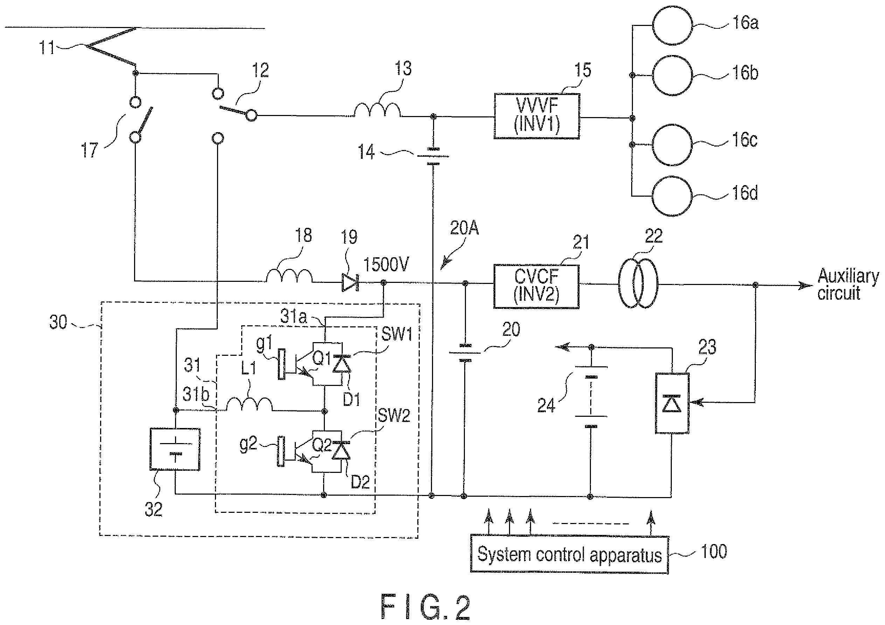

FIG. 2 illustrates an example of the arrangement of an electric vehicle control apparatus including a power storage control apparatus 30 according to the present invention which enables a DC electric railcar to do battery-driven running. The same reference numbers as in FIG. 1 denote the same parts in FIG. 2. Unlike FIG. 1, the power storage control apparatus 30 including a step-up/step-down chopper 31 and a power storage device 32 is provided. The step-up/step-down chopper 31 includes first and second input/output units 31a and 31b. The first input/output unit 31a is connected between the input portion of the CVCF inverter 21 and the output side (the cathode of the diode 19) of the input circuit 20A including the reactor 18, blocking diode 19, and capacitor 20. The second input/output unit 31b is connected to the power storage device 32.

In a normal running state, the contactor 12 is connected to the current collector 11 to supply DC power to the VVVF inverter 15. The current collector 11 can come into contact with an overhead wire 10 or move away from it. The output from the VVVF inverter 15 is supplied to the main motors 16a to 16d.

In the normal running state, the contactor 17 is connected to the current collector 11. At this time, the power storage control apparatus 30 causes the step-up/step-down chopper 31 to lower the voltage (1,500 V) received from the input circuit 20A and causes the power storage device 32 to store the power (300 V), as will be described later. As described above, the input circuit 20A includes the reactor 18 configured to receive power from the contactor 17, the blocking diode 19 configured to rectify the output from the reactor 18, and the capacitor 20 connected between the cathode of the blocking diode 19 and the negative-side power supply line.

In an emergency running state where no overhead wire voltage can be obtained, the contactor 12 is switched to the power storage device 32, and the contactor 17 is basically turned off. In the emergency running state, the voltage (300 V) from the power storage device 32 is input to the VVVF inverter 15 via the contactor 12. Hence, the main motors 16a to 16d are driven to make the electric vehicle run, although the speed is low.

In the emergency running state, the power storage control apparatus 30 causes the step-up/step-down chopper 31 to raise the voltage from the power storage device 32, thereby supplying the raised voltage (1,500 V) to the CVCF inverter 21, as will be described later. Hence, the CVCF inverter 21 can perform the steady operation even during battery-driven running. This allows operation of auxiliary equipment such as the lamps and air conditioner in the electric vehicle as in the normal state. Stably operating the lamps and air conditioner is particularly important in a passenger car.

In general, when the nominal voltage of the overhead wire is 1,500 V, the voltage of the power storage device 32 is set at about 300 V, thereby obtaining the voltage (e.g., 1,500 V) necessary for the operation of the CVCF inverter by the step-up operation. The output from the battery 24 is used as the power supply voltage of, e.g., a system control apparatus 100. The system control apparatus 100 outputs a pulse to drive the step-up/step-down chopper 31 and a control signal to control the contactors 17 and 12, and the like. The system control apparatus 100 can also detect the state of the overhead wire voltage.

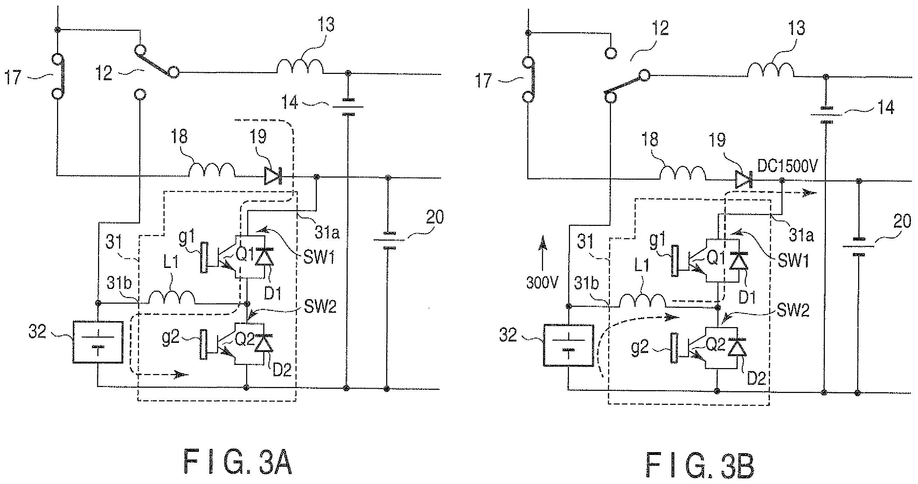

FIGS. 3A and 3B are circuit diagrams for explaining the operation of the above-described step-up/step-down chopper 31 in more detail. A series circuit of switching circuits SW1 and SW2 is connected between the ground line and the cathode of the blocking diode 19. Each of switching circuits SW1 and SW2 uses an insulated gate bipolar transistor (IGBT). Gate circuits g1 and g2 receive a control signal from the system control apparatus 100 and on/off-control switching circuits SW1 and SW2, respectively. One electrode of the power storage device 32 is connected to the ground line. The other electrode is connected to the node between switching circuits SW1 and SW2 via a reactor L1 and also connected to one terminal of the contactor 12. The contactor 12 can take a first running state in which power from the overhead wire is selected and a second running state in which power from the power storage device 32 is selected.

FIG. 3A shows the current flow in the "charge mode" of the step-up/step-down chopper 31. Switching circuit SW1 is on/off-controlled, and switching circuit SW2 remains off. The current from the blocking diode 19 flows into the power storage device 32 via the input/output unit 31a, switching circuit SW1, reactor L1, and input/output unit 31b so as to perform charging (voltage drop). To hold the stored power, switching circuits SW1 and SW2 are turned off. FIG. 3B shows the current flow in the "discharge mode" of the step-up/step-down chopper 31. For discharge, switching circuit SW1 remains off, and switching circuit SW2 is on/off-controlled. Then, the voltage raised by the reactor L1 is sent to the CVCF inverter 21 via a diode D1 of switching circuit SW1 and the input/output unit 31a.

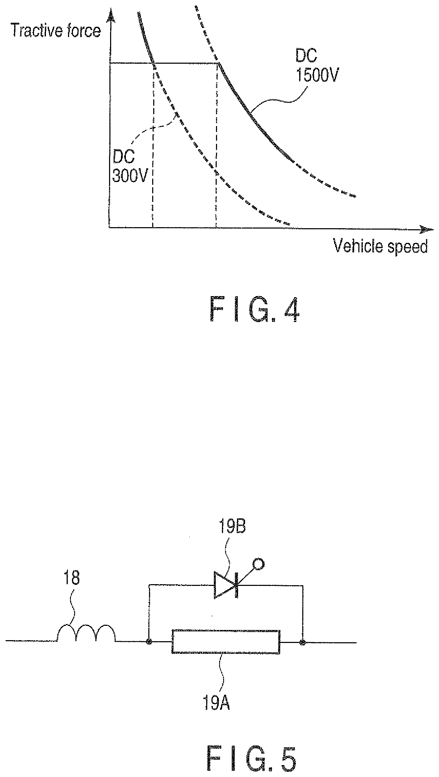

FIG. 4 shows the relationship between the vehicle speed and the tractive force of an electric vehicle which runs at DC voltages of 1,500 and 300 V. In the normal running state (first running state), a DC voltage of 1,500 V is obtained from the overhead wire. In the emergency running state (second running state), however, a DC voltage of 300 V is obtained from the power storage device 32. The running speed in the emergency running state goes low.

Note that the blocking diode 19 in the input circuit 20A of the above-described embodiment can use a parallel circuit of a high resistor 19A and a thyristor 19B, as shown in FIG. 5. Hence, this circuit portion will generically be referred to as a high-resistance portion. In the circuit shown in FIG. 5, the thyristor 19B is off upon activating the apparatus. The current from the overhead wire charges the capacitor 20 via the resistor 19A. This prevents an overcurrent at the time of activation. When charge is completed, the thyristor 19B is turned on.

As described above, the apparatus according to the present invention effectively uses the onboard power storage device. The power storage control apparatus 30 is effective for all of a DC electric railcar, AC electric railcar, and AC/DC electric railcar. If power supply from the overhead wire runs short, the power storage device 32 (low voltage) is directly connectable to the input portion of the main circuit device. This enables the vehicle to run at low speed and move to a nearest appropriate point. Simultaneously, the power storage control apparatus 30 is operated to raise the voltage of the power storage device 32 so that the CVCF inverter 21 can perform the steady output operation and supply power of normal voltage to the auxiliary circuits such as the AC fluorescent lamps and air conditioner which require high AC power.

Additionally, the power storage state of the power storage device is managed to set the battery in a charge state capable of absorbing energy regenerated until the stop. This allows the power storage device to absorb the regenerated energy of a train in the low-speed range just before the stop of the train. It is therefore possible to prevent regeneration cancellation in the low-speed range and improve the train stopping accuracy.

A very short-time power supply interruption, which is called instantaneous offline and steadily occurs in, e.g., an electric vehicle running in a normal overhead wire voltage state, does not impede running because even if the VVVF inverter 15 stops during powered running, the electric vehicle coasts. However, the CVCF inverter 21 needs to continuously operate because its stop turns off the fluorescent lamps. In the present invention, the power storage device 32 can immediately supply power via the step-up/step-down chopper 31 to enable the continuous operation, as described above.

Regenerative brakes return power to the overhead wire side. However, if a few regenerated power loads (other cars) exist on the overhead wire side, the overhead wire voltage may rise abnormally due to the regenerated power and disable the regeneration operation.

To prevent this, the apparatus sets a charge margin so as to charge the power storage device 32 up to 80% of the full charge state in powered running. If the overhead wire voltage is going to abnormally rise upon applying the regenerative brakes, the step-up/step-down chopper performs a step-down operation to charge the power storage device 32, thereby continuing the regeneration operation. For example, the system control apparatus 100 manages setting and control of the charge state.

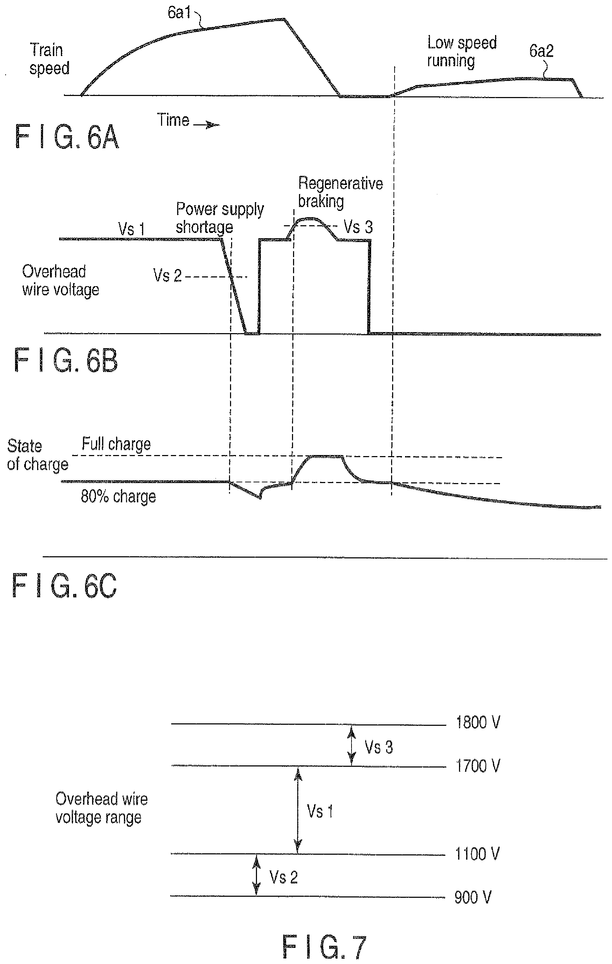

The waveform in FIG. 6A indicates an example of the change of the running speed of the electric vehicle. The waveform in FIG. 6B indicates the change of the overhead wire voltage. The waveform in FIG. 6C indicates the charge state of the power storage device 32.

In an abnormal overhead wire voltage state, i.e., if power supply from the overhead wire cannot be received, emergency running at low speed is possible, as indicated by a line 6a2 in FIG. 6A. A line 6a1 in FIG. 6A indicates the speed of normal running.

In the low-speed emergency running, the CVCF inverter 21 can perform the normal operation. Hence, the fluorescent lamps which function based on the output power of the CVCF inverter 21 can be kept on. A compressor for controlling the air pressure of the brakes and the like can also normally operate. This enables to drive the electric vehicle for a long time and safely evacuate it to, e.g., a nearest station in case of a power failure between stations.

FIG. 7 shows an example of the range of the overhead wire voltage. The nominal overhead wire voltage of 1,500 V fluctuates within the range of 900 to 1,800 V. In the range of a steady voltage Vs1 that can be regarded as a normal overhead wire voltage, the charge state of the power storage device 32 is maintained at, e.g., 80% by the charge or discharge operation of the power storage control apparatus 30.

FIG. 6B shows the actual change of the overhead wire voltage in overhead wire voltage ranges Vs1, Vs2, and Vs3. FIG. 6C shows the state of charge of the power storage device 32 obtained under the control of the power storage control apparatus 30.

When a power supply interruption such as the off-wire of the current collector 11 has occurred, the voltage enters the region Vs2, and the power storage device 32 supplies power to the CVCF inverter 21 in the discharge mode. At this time, the blocking diode 19 acts to prohibit power supply to the VVVF inverter 15, and control capacity (discharge amount) of the power storage control apparatus can be small. On the other hand, when the overhead wire voltage abnormally rises into the region V3s upon applying the regenerative brakes, the power storage control apparatus 30 transits to the charge mode of the power storage device 32 and suppresses the increase of the overhead wire voltage. This raises the regeneration efficiency and greatly contributes to energy saving. The above-described operation is performed under the control of the system control apparatus 100.

The present invention is not limited to the above-described embodiment and is also applicable to various kinds of vehicles. Applications to various vehicles will be explained below.

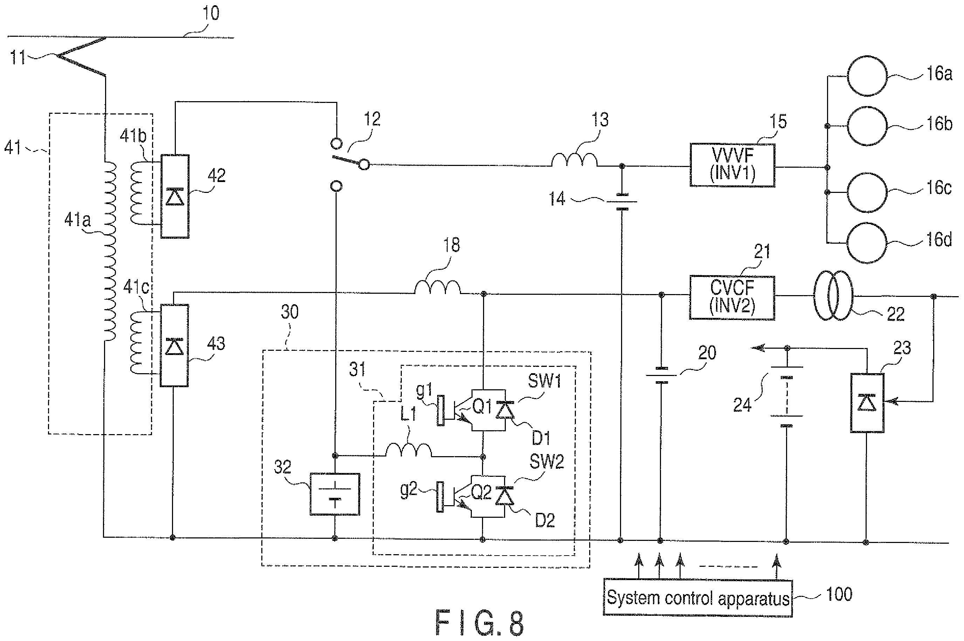

FIG. 8 illustrates an example of a circuit formed by applying the basic concept of the present invention to an AC electric vehicle. The current collector 11 is connected to a first winding 41a of a main transformer 41. A second winding 41b of the main transformer 41 is connected to one input terminal of the contactor 12 via a rectifier 42. The output from the contactor 12 is supplied to the VVVF inverter 15 via an input filter. The output from a rectifier 43 connected to a third winding 41c of the main transformer 41 is supplied to the CVCF inverter 21 via an input filter on the auxiliary circuit side. In this example, the rectifier 42, reactor 18 and capacitor 20 correspond to the input circuit 20A shown in FIG. 2.

Referring to FIG. 8, the step-up/step-down chopper 31 which performs the charge/discharge operation of the power storage device 32 is connected between the input portion of the high-voltage auxiliary power supply unit 21 and the rectifier 43 connected to the third winding 41c of the main transformer 41. When the contactor 12 disconnects the input filter of the VVVF inverter 15 of the main circuit from the overhead wire 10, the output from the power storage device 32 is input to the VVVF inverter 15 instead. The remaining parts are the same as in the above-described embodiment and are added with the same reference numbers.

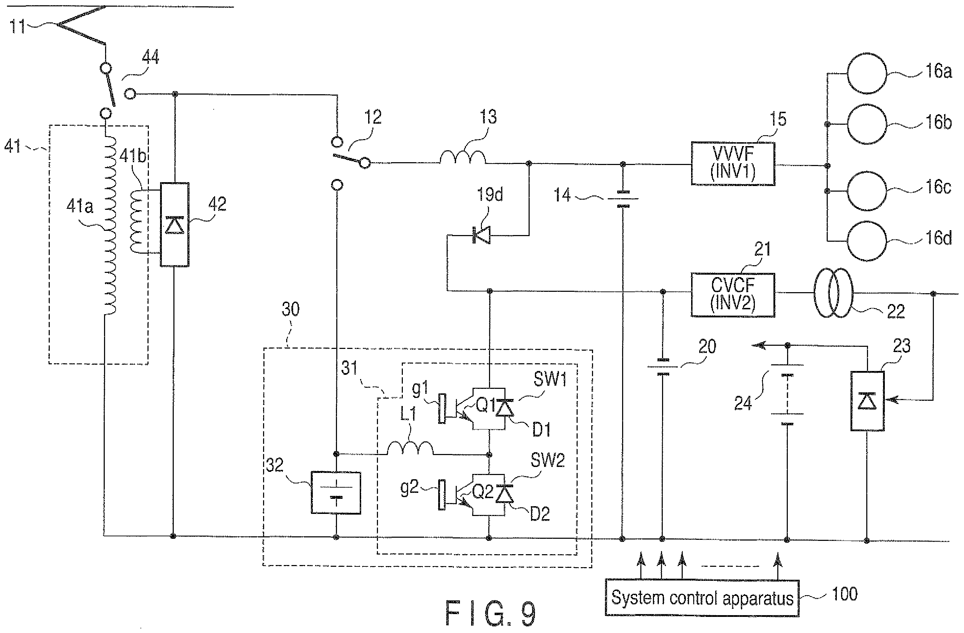

FIG. 9 illustrates an example of a circuit formed by applying the basic concept of the present invention to an AC/DC electric vehicle. When the overhead wire is AC, the current collector 11 is connectable to the first winding 41a of the main transformer 41 via a contactor 44. When the overhead wire is DC, the current collector 11 is connectable to one input terminal of the contactor 12 via the contactor 44. The second winding 41b of the main transformer 41 is connected to the rectifier 42. The output from the rectifier 42 is connected to the one input terminal of the contactor 12. The contactor 12 is connected to the output side of the power storage device 32 in the emergency running state. In this example, the rectifier 42, reactor 13, blocking diode 19d, and capacitor 20 correspond to the input circuit 20A shown in FIG. 2.

The apparatus in FIG. 9 is an example of application to an AC/DC electric vehicle which can do emergency running at low speed using the onboard power storage device without power supply from the overhead wire 10. One output portion of the step-up/step-down chopper 31 which performs the charge/discharge operation of the power storage device 32 is connected between the cathode side of the blocking diode 19d and the input portion of the high-voltage auxiliary power supply unit (CVCF inverter 21).

When the input filter of the VVVF inverter 15 of the main circuit is disconnected from the overhead wire, the power output from the power storage device 32 is input to the VVVF inverter 15 instead. The remaining parts are the same as in the above-described embodiment and are added with the same reference numbers.

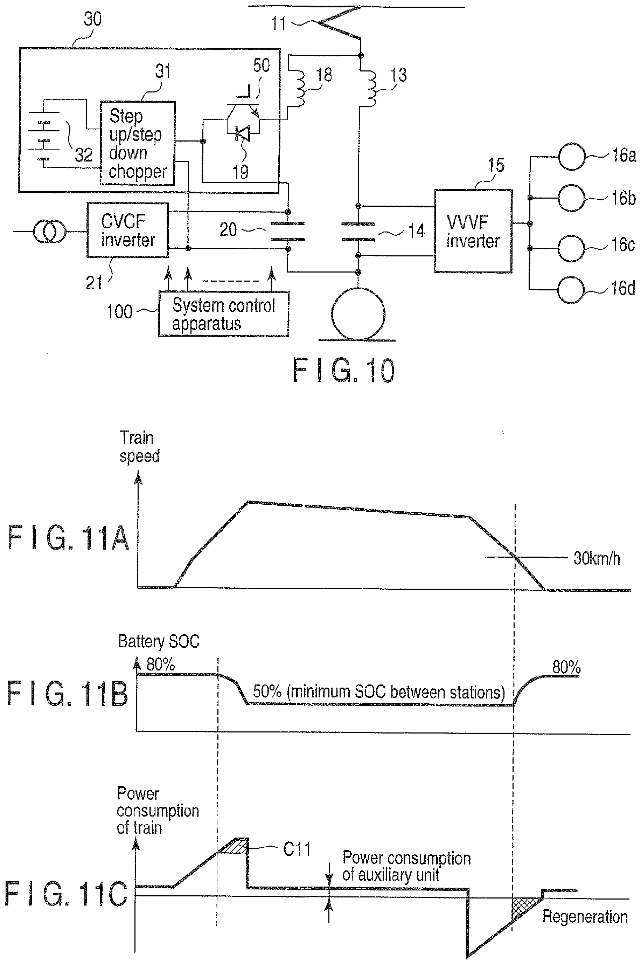

FIG. 10 shows a modification of the apparatus in FIG. 2. A discharge control element (IGBT) 50 is connected in parallel to the blocking diode 19. The scheme in FIG. 10 is different from that in FIG. 2 in that the output from the step-up chopper is connected not only to the auxiliary power supply unit but also to the main circuit side so that high-voltage power based on the discharge power from the power storage device 32 can be supplied to the main circuit side. If the capacity of the power storage device is small, no energy to support powered running is available. However, when the power storage capacity is large, the power storage device supplies power to the main circuit to implement an overhead wire hybrid system.

To use the energy of the power storage device for powered running, the discharge control element 50 in FIG. 10 is turned on to emit energy to the main circuit.

FIGS. 11A to 11C show examples of the train speed and the charge/discharge pattern of the power storage device 32 aiming at improving the stopping accuracy of the train automatic stopping controller (TASC) of a train using the apparatus shown in FIG. 10. The waveform in FIG. 11A indicates the transition of the train speed. The waveform in FIG. 11B indicates the state of charge of the power storage device. The waveform in FIG. 11C indicates the change in the power consumption the train. In FIG. 11C, discharging the power storage device in a region C11 where the power consumption of the train increases allows reduction of the peak power of the feeding system (overhead wire side) and decreases the loss of the feed line, contributing to energy saving.

When using an automatic train operation (ATO) system which drives a train at a predetermined speed between stations, discharge of the power storage device raises the pantograph point voltage. This enables to improve the powered running performance and enhance the energy-saving operation effect of suppressing the maximum speed.

During running between stations, the state of charge (SOC) of the power storage device needs to maintain a predetermined level or more, as shown in FIG. 11B. This aims at ensuring a running energy that allows the train to run without overhead wires up to the next station if power feeding stops due to a power failure during running between stations.

Referring to FIG. 11B, the SOC is constant at 50% in a predetermined section between stations. As the train comes closer to the next station, the energy necessary for offline running becomes smaller. Hence, required power consumption is calculated in accordance with the train position to change the minimum necessary SOC between stations. The capacity of the power storage device is effectively used in this way (for example, the power storage device is positively discharged for regenerated power). This allows further suppression of the total energy confirmed by the train.

When the train decelerates and stops at a station, the regenerated energy is absorbed with priority on the low speed range. In this example, the power storage device absorbs regenerated power in a train speed range of 30 km/h or less. When power is regenerated in the overhead wire, and the load to consume (absorb) the regenerated power of the train is lost, the regeneration is canceled, and the mechanical (air) brakes need to be used. Use of the mechanical brakes at this time largely influences the train stopping accuracy. However, if regeneration cancellation at 30 km/h or less is completely prevented as in the example, the mechanical brakes need not be used, and the stopping accuracy can always remain high.

Regeneration cancellation at 30 km/h or less largely influences the accuracy just before the stop. However, if the SOC of the power storage device is low enough to absorb regenerated power, the power storage device can absorb regenerated power in the speed range of 30 km/h or more, contributing to enhancing the energy saving effect.

In case of a power failure or low voltage in the overhead wires, the discharge control element 50 in FIG. 10 is turned off to cause the power storage device to supply energy only to the CVCF inverter 21. A power failure in the overhead wire may result from a ground fault on the feeding system side. For safety reasons, it is important to prevent outflow of power from the train to the accident point on the feeding system side.

For offline running using the apparatus in FIG. 10, the pantograph serving as the current collector 11 is retracted to disconnect the main circuit from the overhead wire. Then, the discharge control element 50 is turned on to supply the energy to the VVVF inverter 15. To make a train run without overhead wire in a railway of the third rail system, a breaker is provided immediately after the current collector to disconnect the main circuit of the train from the overhead wire. Note that a battery is used in the above example. However, the present invention is applicable to not only the battery but also various kinds of energy storage devices such as an electric double-layer capacitor (EDLC). The EDLC has a very large capacity.

As described above, when a power failure in the overhead wire has occurred, the train runs at low speed while being driven by the battery to take the passengers to the nearest station. In the present invention, the auxiliary power supply unit can operate even during the battery-driven running. It is therefore possible to keep the fluorescent lamps on. Additionally, since the compressor for compressing air in an air chamber necessary for braking keeps operating, a safe operation is guaranteed for a long time.

Applying the present invention to a DC vehicle enables offline compensation. Since a large capacitor for offline compensation can be removed, the auxiliary power supply unit can be made compact. In addition, since regenerated power can partially be absorbed, the regeneration efficiency improves. More specifically, under the control of the system control apparatus 100, charge/discharge control of the power storage device is done in accordance with the running speed, and in the low speed range just before a stop, regeneration is performed not to the feed line but only to the power storage device 32. This makes it possible to, in a section where the ATP system is employed, completely prevent regeneration cancellation just before a stop and improve the stopping position accuracy.

The amount of energy necessary for offline running is always grasped during running between stations. Additionally, the lower limit value of the SOC of the battery is maintained to effectively utilize the limited capacity of the power storage device. This allows enhancement of the effect of preventing regeneration cancellation and suppressing peak power of a train. More specifically, under the control of the system control apparatus 100, the amount of energy necessary for emergency offline running is calculated or acquired from a database in accordance with the train position. Based on the result, the power storage device is charged or discharged.

For an AC electric railcar, an AC/AC section (the dead section between substations) is provided, and a power supply interruption steadily occurs. The AC electric railcar is equipped with expensive DC fluorescent lamps as room lamps because they must not turn off every time the train passes through the section. However, since applying the present invention to the AC electric railcar enables to input power to the auxiliary power supply unit by discharging the power storage device, inexpensive general AC fluorescent lamps are usable.

When running in a DC section or an AC section, an AC/DC electric railcar operates as a DC electric railcar or an AC electric railcar. This electric railcar also passes through a long dead section called an AC/DC section. It is therefore necessary to turn on DC fluorescent lamps for a long time using a battery, and a large battery capacity is required. However, when the present invention is applied, general AC fluorescent lamps are usable, and the battery capacity need not be large.

As described above, the present invention is effectively applicable to an apparatus including a power storage device, like a DC electric railcar, AC electric vehicle, and AC/DC vehicle. The above-described solving means allows a power storage device to ensure power for powered running at low speed for a main circuit and also function as a sufficient high-voltage auxiliary power supply for an auxiliary circuit.

## Claims

1. A power storage control apparatus of an electric vehicle, which selectively employs one of a first running state in which power from an overhead wire (10) is used and a second running state in which power from a power storage device (32) is used, the apparatus comprising:
a step-up/step-down chopper (31) including a first input/output portion that receives the power from the overhead wire via an input circuit (20A) and connected to an input portion of a CVCF inverter (21) for an auxiliary circuit, and a second input/output portion connected to the power storage device;
**characterized by** further comprising:
a contactor (12) configured to supply a voltage from the overhead wire or a voltage provided directly from the power storage device to an input portion of a VVVF inverter (15) of a main circuit; and
a control unit (100) configured to control the step-up/step-down chopper (31) and the contactor (12);
wherein the control unit (100) is configured to control the contactor (12) to supply the voltage from the overhead wire to the input portion of the VVVF inverter (15) of the main circuit in the first running state and supply the voltage of the power storage device directly to the input portion of the VVVF inverter (15) in the second running state, and
the control unit (100) is configured to control the step-up/step-down chopper to perform a step-down operation to charge the power storage device (32) in the first running state and perform a step-up operation to discharge the power storage device (32) and supply the power to the CVCF inverter (21) in the second running state.

2. The power storage control apparatus according to claim 1, **characterized by** further comprising:
a diode (19d) comprising an anode connected to the input portion of the VVVF inverter (15) and a cathode connected to the input portion of the CVCF inverter (21).

3. The apparatus according to claim 1 or 2, **characterized in that** the input circuit (20A) comprises one of a blocking diode (19) and a parallel circuit of a thyristor (19B) and a resistor (19A).

4. The apparatus according to claims 1 to 3, **characterized in that** if an overhead wire voltage falls within a preset low voltage range (Vs2) in a predetermined fluctuation range of the overhead wire voltage, the control unit (100) performs a discharge operation of the step-up/step-down chopper.

5. The apparatus according to one of the preceding claims, **characterized in that** the control unit (100) controls the step-up/step-down chopper to maintain a full charge state of the power storage device when the overhead wire voltage is a steady voltage.

6. The apparatus according to one of the preceding claims,
**characterized in that** the control unit (100) performs a charge/discharge operation of the step-up/step-down chopper (31) to make the power storage device ensure a predetermined charge margin to a full charge state when an overhead wire voltage is a voltage near a center of a fluctuation range, and performs a charge operation when the overhead wire voltage is higher than the voltage near the center.

7. The apparatus according to one of the preceding claims,
**characterized in that**
the electric vehicle is an AC electric vehicle to which power from an AC overhead wire is supplied, and the power storage control apparatus further comprises:
a main transformer having a first winding, a second winding, and a third winding, the first winding receiving the overhead wire voltage;
a first rectifier (42) configured to rectify an AC voltage generated in the second winding (41b) and
supply the rectified voltage to the contactor (12) as the voltage from the overhead wire; and
a second rectifier (43) configured to rectify an AC voltage generated in the third winding (41c) and
supply the rectified voltage to the CVCF inverter (21) and the step-up/step-down chopper (31).

8. The apparatus according to claim 7,
**characterized in that** the control unit (100) performs a charge/discharge operation of the step-up/step-down chopper (31) to make the power storage device ensure a predetermined charge margin to a full charge state when an overhead wire voltage is a voltage near a center of a fluctuation range, performs a charge operation when the overhead wire voltage is higher than the voltage near the center, and performs a discharge operation when the overhead wire voltage is lower than the voltage near the center.

9. The apparatus according to one of claims 1 to 6,
**characterized in that**
the electric vehicle is an AC/DC electric vehicle to which power is suppliable from one of an AC overhead wire and a DC overhead wire, and
the power storage control apparatus further comprises:
a main transformer having a first winding and a second winding, the first winding receiving the AC overhead wire voltage;
a switch (44) configured to supply the voltage from the overhead wire to one of the first winding and the contactor (12); and
a rectifier (42) configured to rectify an AC voltage generated in the second winding (41b) and supply the rectified voltage to the contactor (12) when the switch (44) supplies the voltage from the overhead wire to the first winding.

10. The apparatus according to claim 9,
**characterized in that** the control unit (100) performs a charge/discharge operation of the step-up/step-down chopper (31) to make the power storage device ensure a predetermined charge margin to a full charge state when an overhead wire voltage is a voltage near a center of a fluctuation range, performs a charge operation when the overhead wire voltage is higher than the voltage near the center, and performs a discharge operation when the overhead wire voltage is lower than the voltage near the center.

11. A power storage control method of a power storage control apparatus of an electric vehicle, which selectively employs one of a first running state in which power from an overhead wire (10) is used and a second running state in which power from a power storage device (32) is used,
the power storage control apparatus comprising:
a step-up/step-down chopper (31) including a first input/output portion that receives the power from the overhead wire via an input circuit (20A) and connected to an input portion of a CVCF inverter (21) for an auxiliary circuit, and a second input/output portion connected to the power storage device; and
a contactor (12) configured to supply a voltage from the overhead wire or a voltage provided directly from the power storage device to an input portion of a VVVF inverter (15) of a main circuit;
the power storage control method **characterized by** comprising:
supplying the voltage from the overhead wire to the input portion of the VVVF inverter (15) of the main circuit via the contactor (12) and performing a step-down operation by the step-up/step-down chopper to charge the power storage device (32) in the first running state; and
supplying the voltage of the power storage device directly to the input portion of the VVVF inverter (15) and performing a step-up operation by the step-up/step-down chopper to discharge the power storage device (32) and supply the power to the CVCF inverter (21) in the second running state.

## Patentansprüche

1. Steuerungseinrichtung zur Energiespeicherung eines Elektrofahrzeugs, die selektiv einen von einem ersten Betriebszustand, in dem Energie von einer Oberleitung (10) verwendet wird, und einem zweiten Betriebszustand, in dem Energie von einer Vorrichtung zur Energiespeicherung (32) verwendet wird, anwendet, wobei die Einrichtung umfasst:
einen Aufwärts-/Abwärtssteller (31) einschließlich eines ersten Eingangs-/Ausgangsabschnitts, der die Energie von der Oberleitung über eine Eingangsschaltung (20A) erhält und an einen Eingangsabschnitt eines CVCF-Wechselrichters (21) für eine Hilfsschaltung angeschlossen ist, und eines zweiten Eingangs-/Ausgangsabschnitts, der an die Vorrichtung zur Energiespeicherung angeschlossen ist;
**dadurch gekennzeichnet, dass** sie weiter umfasst:
ein Schütz (12), das konfiguriert ist, um einem Eingangsabschnitt eines VVVF-Wechselrichters (15) einer Hauptschaltung eine Spannung von der Oberleitung oder eine Spannung, die direkt von der Vorrichtung zur Energiespeicherung bereitgestellt wird, zuzuführen; und
eine Steuerungseinheit (100), die konfiguriert ist, um den Aufwärts-/Abwärtssteller (31) und das Schütz (12) zu steuern;
wobei die Steuerungseinheit (100) konfiguriert ist, um das Schütz (12) zu steuern, um dem Eingangsabschnitt des VVVF-Wechselrichters (15) der Hauptschaltung im ersten Betriebszustand die Spannung von der Oberleitung zuzuführen und dem Eingangsabschnitt des VVVF-Wechselrichters (15) im zweiten Betriebszustand die Spannung der Vorrichtung zur Energiespeicherung direkt zuzuführen, und
die Steuerungseinheit (100) konfiguriert ist, um den Aufwärts-/Abwärtssteller zu steuern, einen Abwärtsvorgang durchzuführen, um die Vorrichtung zur Energiespeicherung (32) im ersten Betriebszustand zu laden und einen Aufwärtsvorgang durchzuführen, um die Vorrichtung zur Energiespeicherung (32) zu entladen und dem CVCF-Wechselrichter (21) im zweiten Betriebszustand die Energie zuzuführen.

2. Steuerungseinrichtung zur Energiespeicherung nach Anspruch 1, **dadurch gekennzeichnet, dass** sie weiter umfasst:
eine Diode (19d), umfassend eine Anode, die an den Eingangsabschnitt des VVVF-Wechselrichters (15) angeschlossen ist, und eine Kathode, die an den Eingangsabschnitt des CVCF-Wechselrichters (21) angeschlossen ist.

3. Einrichtung nach Anspruch 1 oder 2, **dadurch gekennzeichnet, dass** die Eingangsschaltung (20A) eine von einer Sperrdiode (19) und einer Parallelschaltung eines Thyristors (19B) und eines Widerstands (19A) umfasst.

4. Einrichtung nach Ansprüche 1 bis 3, **dadurch gekennzeichnet, dass**, wenn eine Oberleitungsspannung innerhalb eines vorgegebenen Niederspannungsbereichs (Vs2) in einem vorbestimmten Schwankungsbereich der Oberleitungsspannung liegt, die Steuerungseinheit (100) einen Entladevorgang des Aufwärts-/Abwärtsstellers durchführt.

5. Einrichtung nach einem der vorstehenden Ansprüche, **dadurch gekennzeichnet, dass** die Steuerungseinheit (100) den Aufwärts-/Abwärtssteller steuert, um einen Vollladezustand der Vorrichtung zur Energiespeicherung zu halten, wenn die Oberleitungsspannung eine gleichmäßige Spannung ist.

6. Einrichtung nach einem der vorstehenden Ansprüche,
**dadurch gekennzeichnet, dass** die Steuerungseinheit (100) einen Lade-/Entladevorgang des Aufwärts-/Abwärtsstellers (31) durchführt, um die Vorrichtung zur Energiespeicherung dazu zu veranlassen, einen vorbestimmten Ladespielraum zu einem Vollladezustand zu gewährleisten, wenn eine Oberleitungsspannung eine Spannung in der Nähe eines Mittelpunkts eines Schwankungsbereichs ist, und einen Ladevorgang durchführt, wenn die Oberleitungsspannung höher als die Spannung in der Nähe des Mittelpunkts ist.

7. Einrichtung nach einem der vorstehenden Ansprüche,
**dadurch gekennzeichnet, dass**
das Elektrofahrzeug ein Wechselstromelektrofahrzeug ist, dem Energie von einer Wechselstromoberleitung zugeführt wird, und die Steuerungseinrichtung zur Energiespeicherung weiter umfasst:
einen Haupttransformator, der eine erste Wicklung, eine zweite Wicklung und eine dritte Wicklung aufweist, wobei die erste Wicklung die Oberleitungsspannung erhält;
einen ersten Gleichrichter (42), der konfiguriert ist, um eine Wechselstromspannung, die in der zweiten Wicklung (41b) erzeugt wird, gleichzurichten und dem Schütz (12) als die Spannung von der Oberleitung die gleichgerichtete Spannung zuzuführen; und
einen zweiten Gleichrichter (43), der konfiguriert ist, um eine Wechselstromspannung, die in der dritten Wicklung (41c) erzeugt wird, gleichzurichten und dem CVCF-Wechselrichter (21) und dem Aufwärts-/Abwärtssteller (31) die gleichgerichtete Spannung zuzuführen.

8. Einrichtung nach Anspruch 7,
**dadurch gekennzeichnet, dass** die Steuerungseinheit (100) einen Lade-/Entladevorgang des Aufwärts-/Abwärtsstellers (31) durchführt, um die Vorrichtung zur Energiesteuerung dazu zu veranlassen, einen vorbestimmten Ladespielraum zu einem Vollladezustand zu gewährleisten, wenn eine Oberleitungsspannung eine Spannung in der Nähe eines Mittelpunkts eines Schwankungsbereichs ist, einen Ladevorgang durchführt, wenn die Oberleitungsspannung höher als die Spannung in der Nähe des Mittelpunkts ist, und einen Entladevorgang durchführt, wenn die Oberleitungsspannung niedriger als die Spannung in der Nähe des Mittelpunkts ist.

9. Einrichtung nach einem der Ansprüche 1 bis 6, **dadurch gekennzeichnet, dass**
das Elektrofahrzeug ein Wechselstrom-/Gleichstromelektrofahrzeug ist, dem Energie von einer von einer Wechselstromoberleitung und einer Gleichstromoberleitung zugeführt werden kann, und
die Steuerungseinrichtung zur Energiespeicherung weiter umfasst:
einen Haupttransformator, der eine erste Wicklung und eine zweite Wicklung aufweist, wobei die erste Wicklung die Wechselstromoberleitungsspannung erhält;
einen Schalter (44), der konfiguriert ist, um einem von der ersten Wicklung und dem Schütz (12) die Spannung von der Oberleitung zuzuführen; und
einen Gleichrichter (42), der konfiguriert ist, um eine Wechselstromspannung, die in der zweiten Wicklung (41b) erzeugt wird, gleichzurichten und dem Schütz (12) die gleichgerichtete Spannung zuzuführen, wenn der Schalter (44) der ersten Wicklung die Spannung von der Oberleitung zuführt.

10. Einrichtung nach Anspruch 9,
**dadurch gekennzeichnet, dass** die Steuerungseinheit (100) einen Lade-/Entladevorgang des Aufwärts-/Abwärtsstellers (31) durchführt, um die Vorrichtung zur Energiespeicherung dazu zu veranlassen, einen vorbestimmten Ladespielraum zu einem Vollladezustand zu gewährleisten, wenn eine Oberleitungsspannung eine Spannung in der Nähe eines Mittelpunkts eines Schwankungsbereichs ist, einen Ladevorgang durchführt, wenn die Oberleitungsspannung höher als die Spannung in der Nähe des Mittelpunkts ist, und einen Entladevorgang durchführt, wenn die Oberleitungsspannung niedriger als die Spannung in der Nähe des Mittelpunkts ist.

11. Steuerungsverfahren zur Energiespeicherung einer Steuerungseinrichtung zur Energiespeicherung eines Elektrofahrzeugs, das selektiv einen von einem ersten Betriebszustand, in dem Energie von einer Oberleitung (10) verwendet wird, und einem zweiten Betriebszustand, in dem Energie von einer Vorrichtung zur Energiespeicherung (32) verwendet wird, anwendet,
wobei die Steuerungseinrichtung zur Energiespeicherung umfasst:
einen Aufwärts-/Abwärtssteller (31) einschließlich eines ersten Eingangs-/Ausgangsabschnitts, der die Energie von der Oberleitung über eine Eingangsschaltung (20A) erhält und an einen Eingangsabschnitt eines CVCF-Wechselrichters (21) für eine Hilfsschaltung angeschlossen ist, und eines zweiten Eingangs-/Ausgangsabschnitts, der an die Vorrichtung zur Energiespeicherung angeschlossen ist; und
ein Schütz (12), das konfiguriert ist, um einem Eingangsabschnitt eines VVVF-Wechselrichters (15) einer Hauptschaltung eine Spannung von der Oberleitung oder eine Spannung, die direkt von der Vorrichtung zur Energiespeicherung bereitgestellt wird, zuzuführen;
wobei das Steuerungsverfahren zur Energiespeicherung **dadurch gekennzeichnet ist, dass** es umfasst:
Zuführen der Spannung von der Oberleitung zum Eingangsabschnitt des VVVF-Wechselrichters (15) der Hauptschaltung über das Schütz (12) und Durchführen eines Abwärtsvorgangs durch den Aufwärts-/Abwärtssteller, um die Vorrichtung zur Energiespeicherung (32) im ersten Betriebszustand zu laden; und
direktes Zuführen der Spannung der Vorrichtung zur Energiespeicherung zum Eingangsabschnitt des VVVF-Wechselrichters (15) und Durchführen eines Aufwärtsvorgangs durch den Aufwärts-/Abwärtssteller, um die Vorrichtung zur Energiespeicherung (32) zu entladen und Zuführen der Energie zum CVCF-Wechselrichter (21) im zweiten Betriebszustand.

## Revendications

1. Appareil de commande de stockage d'énergie d'un véhicule électrique, qui emploie sélectivement l'un d'un premier état de marche dans lequel on utilise de l'énergie provenant d'un fil métallique aérien (10) et d'un second état de marche dans lequel on utilise de l'énergie provenant d'un dispositif de stockage d'énergie (32), l'appareil comprenant :
un hacheur élévateur/abaisseur (31) comprenant une première partie d'entrée/sortie qui reçoit l'énergie du fil aérien via un circuit d'entrée (20A) et connecté à une partie d'entrée d'un convertisseur CVCF (21) pour un circuit auxiliaire, et une seconde partie d'entrée/sortie connectée au service de stockage d'énergie ;
**caractérisé en ce qu'**il comprend en outre :
un contacteur (12) configuré pour fournir une tension venant du fil aérien ou une tension fournie directement par le dispositif de stockage d'énergie à une partie d'entrée d'un convertisseur VVVF (15) d'un circuit principal ; et
une unité de commande (100) configurée pour commander le hacheur élévateur/abaisseur (31) et le contacteur (12) ;
dans lequel l'unité de commande (100) est configurée pour commander le contacteur (12) afin de fournir la tension du fil aérien à la partie d'entrée du convertisseur VVVF (15) du circuit principal dans le premier état de marche et fournir la tension du dispositif de stockage d'énergie directement à la partie d'entrée du convertisseur VVVF (15) dans le second état de marche, et
l'unité de commande (100) est configurée pour commander le hacheur élévateur/abaisseur afin d'effectuer une opération d'abaissement pour charger le dispositif de stockage d'énergie (32) dans le premier état de marche et d'effectuer une opération d'élévation pour décharger le dispositif de stockage d'énergie (32) et fournir l'énergie au convertisseur CVCF (21) dans le second état de marche.

2. Appareil de commande de stockage d'énergie selon la revendication 1, **caractérisé en ce qu'**il comprend en outre :
une diode (19d) comprenant une anode connectée à la partie d'entrée du convertisseur VVVF (15) et une cathode connectée à la partie d'entrée du convertisseur CVCF (21).

3. Appareil selon la revendication 1 ou 2, **caractérisé en ce que** le circuit d'entrée (20A) comprend l'un(e) d'une diode de blocage (19) et d'un circuit parallèle d'un thyristor (19B) et d'une résistance (19A).

4. Appareil selon les revendications 1 à 3, **caractérisé en ce que**, si une tension de fil aérien tombe dans une plage de tensions basses préétablies (Vs2) dans une plage de fluctuations prédéterminée de la tension du fil aérien, l'unité de commande (100) effectue une opération de décharge du hacheur élévateur/abaisseur.

5. Appareil selon l'une quelconque des revendications précédentes, **caractérisé en ce que** l'unité de commande (100) commande le hacheur élévateur/abaisseur pour maintenir un état de pleine charge du dispositif de stockage d'énergie lorsque la tension du fil aérien est une tension constante.

6. Appareil selon l'une quelconque des revendications précédentes,
**caractérisé en ce que** l'unité de commande (100) effectue une opération de charge/décharge du hacheur élévateur/abaisseur (31) pour faire en sorte que le dispositif de stockage d'énergie garantisse une marge de charge prédéterminée à un état de pleine charge lorsqu'une tension du fil aérien est une tension proche d'un centre d'une plage de fluctuations, et effectue une opération de charge lorsque la tension du fil aérien est supérieure à la tension à proximité du centre.

7. Appareil selon l'une quelconque des revendications précédentes,
**caractérisé en ce que** :
le véhicule électrique est un véhicule électrique CA auquel de l'énergie provenant d'un fil aérien CA est fournie et l'appareil de commande de stockage d'énergie comprend en outre :
un transformateur principal ayant un premier enroulement, un deuxième enroulement et un troisième enroulement, le premier enroulement recevant la tension du fil aérien ;
un premier redresseur (42) configuré pour redresser une tension CA générée dans le deuxième enroulement (41b) et fournir la tension redressée au contacteur (12) comme tension venant du fil aérien ; et
un second redresseur (43) configuré pour redresser une tension CA générée dans le troisième enroulement (41c) et fournir la tension redressée au convertisseur CVCF (21) et au hacheur élévateur/abaisseur (31).

8. Appareil selon la revendication 7,
**caractérisé en ce que** l'unité de commande (100) effectue une opération de charge/décharge du hacheur élévateur/abaisseur (31) pour faire en sorte que le dispositif de stockage d'énergie garantisse une marge de charge prédéterminée à un état de pleine charge lorsqu'une tension du fil aérien est une tension proche d'un centre d'une plage de fluctuations, effectue une opération de charge lorsque la tension du fil aérien est supérieure à la tension à proximité du centre et effectue une opération de décharge lorsque la tension du fil aérien est inférieure à la tension à proximité du centre.

9. Appareil selon l'une quelconque des revendications 1 à 6, **caractérisé en ce que** :
le véhicule électrique est un véhicule électrique CA/CC auquel de l'énergie peut être fournie à partir de l'un d'un fil aérien CA et d'un fil aérien CC et
l'appareil de commande de stockage d'énergie comprend en outre :
un transformateur principal ayant un premier enroulement et un deuxième enroulement, le premier enroulement recevant la tension du fil aérien CA ;
un commutateur (44) configuré pour fournir la tension du fil aérien à l'un du premier enroulement et du contacteur (12) ; et
un redresseur (42) configuré pour redresser une tension CA générée dans le deuxième enroulement (41b) et fournir la tension redressée au contacteur (12) lorsque le commutateur (44) fournit la tension du fil aérien au premier enroulement.

10. Appareil selon la revendication 9,
**caractérisé en ce que** l'unité de commande (100) effectue une opération de charge/décharge du hacheur élévateur/abaisseur (31) pour faire en sorte que le dispositif de stockage d'énergie garantisse une marge de charge prédéterminée à un état de pleine charge lorsqu'une tension du fil aérien est une tension proche d'un centre d'une plage de fluctuations, effectue une opération de charge lorsque la tension du fil aérien est supérieure à la tension à proximité du centre et effectue une opération de décharge lorsque la tension du fil aérien est inférieure à la tension à proximité du centre.

11. Procédé de commande de stockage d'énergie d'un appareil de commande de stockage d'énergie d'un véhicule électrique, qui emploie sélectivement l'un d'un premier état de marche dans lequel de l'énergie venant d'un fil aérien (10) est utilisée et un second état de marche dans lequel on utilise de l'énergie provenant d'un dispositif de stockage d'énergie (32),
l'appareil de commande de stockage d'énergie comprenant :
un hacheur élévateur/abaisseur (31) comprenant une première partie d'entrée/sortie qui reçoit l'énergie du fil aérien via un circuit d'entrée (20A) et connecté à une partie d'entrée d'un convertisseur CVCF (21) pour un circuit auxiliaire, et une seconde partie d'entrée/sortie connectée au dispositif de stockage d'énergie ; et
un contacteur (12) configuré pour fournir une tension venant du fil aérien ou une tension fournie directement par le dispositif de stockage d'énergie à une partie d'entrée d'un convertisseur VVVF (15) d'un circuit principal ;
le procédé de commande de stockage d'énergie étant **caractérisé en ce qu'**il comprend :
la fourniture de la tension venant du fil aérien à la partie d'entrée du convertisseur VVVF (15) du circuit principal via le contacteur (12) et la réalisation d'une opération d'abaissement par hacheur élévateur/abaisseur pour charger le dispositif de stockage d'énergie (32) dans le premier état de marche ; et
la fourniture de la tension du dispositif de stockage d'énergie directement à la partie d'entrée du convertisseur VVVF (15) et la réalisation d'une opération d'élévation par le hacheur élévateur/abaisseur pour décharger le dispositif de stockage d'énergie (32) et fournir l'énergie au convertisseur CVCF (21) dans le second état de marche.
